# EUROPÄISCHE PATENTSCHRIFT

(11) **EP 2 103 901 B1**
(45) Veröffentlichungstag und Bekanntmachung des Hinweises auf die Patenterteilung: **26.08.2015**
(21) Anmeldenummer: 08018030.0
(22) Anmeldetag: 15.10.2008
(51) Int. Cl.: G01B 21/26, B62D 15/02

(54) **Verfahren und Vorrichtung zur objektiven Ermittlung einer Geradeausfahrt eines Kraftfahrzeuges**
Method and device for objectively determining straight-ahead travel of a motor vehicle
Procédé et dispositif pour déterminer la marche en ligne droite d'un véhicule

(30) Priorität: 20.03.2008 DE 102008015354
(43) Veröffentlichungstag der Anmeldung: 23.09.2009
(73) Patentinhaber: Dr. Ing. h.c. F. Porsche AG, 70435 Stuttgart (DE)
(72) Erfinder: Freisinger, Claudius, 70563 Stuttgart (DE); Horst, Herbert, 70806 Kornwestheim (DE); Bäumler, Manfred Dr., 70736 Fellbach (DE); Böker, Uwe, 71404 Korb (DE)

(56) Entgegenhaltungen:
- EP-A- 0 329 059
- WO-A-2005/052504
- US-A- 5 105 546
- US-A- 6 076 269

## Beschreibung

Die Erfindung betrifft eine Vorrichtung und ein Verfahren zur objektiven Ermittlung einer Geradeausfahrt eines Kraftfahrzeuges gemäß dem Oberbegriff der Patentansprüche 1 und 12.

Bei Serientests werden bestimmte Fahrzeugeigenschaften durch subjektive Beurteilungen eines Werkers geprüft und bewertet. Dazu gehört unter anderem der Lenkradschiefstand, der während der Fahrt auf der Scheitelrolle durch subjektives Abschätzen des Lenkradschiefstandes in Relation zum Lenkstockmodul geprüft wird. Diese subjektive Beurteilung gestaltet sich als sehr schwierig, da das Lenkrad während der Fahrt auf der Scheitelrolle nicht permanent ruhig steht, sondern durch minimale Lenkbewegungen auf der Scheitelrolle gehalten werden muss. Dadurch ist es für den Werker sehr schwierig, den durchschnittlichen "Schiefwinkel" zu beurteilen. Weiterhin gibt es keinen allgemein gültigen Standard, weil jeder Werker, schon alleine durch den unterschiedlichen Sitzwinkel im Auto, eine leicht andere Beobachtung und somit Beurteilung abgibt. Eine absolut sichere Reproduzierbarkeit ist nicht gegeben.

Aus der EP 04819252 A1 ist eine Vorrichtung zur Ermittlung eines Lenkwinkels zur optimalen Einstellung der Achsgeometrie bekannt. Diese Vorrichtung weist ein Gehäuse auf, von dem im unteren Bereich Klemmmittel elektromotorisch ausfahrbar sind, so dass diese mit dem Lenkradkranz verklemmen. Das Gehäuse liegt auf einem oberen Bereich des Lenkradkranzes aus und wird mit einem Klemmstab beispielsweise an der Windschutzscheibe verklemmt. Im Gehäuse befindet sich eine Lenkradmesswaage, die die gemessenen Lenkradwinkel per Funk von der Lenkradmesswaage zu einer entfernten Steuereinrichtung übermittelt.

Die in der EP 04819252 A1 gezeigte Vorrichtung ist nur geeignet, zur Lenkwinkelerfassung, wenn das Lenkrad nicht bewegt wird, weil das Gehäuse auf dem Lenkradkranz aufliegt und zusätzlich mit einem Klemmstab an der Windschutzscheibe verklemmt werden kann.

Aus der US-5105546 ist eine im Lenkrad eingeklemmte Lenkradwaage benannt. Die Aufgabe der Erfindung besteht demnach darin, die Eignung einer gattungsgemäßen Vorrichtung für eine Anwendung auf einem Dynamikprüfstand zu erhöhen.

Die Aufgabe wird erfindungsgemäß mit den Merkmalen der Patentansprüche 1 und 12 gelöst. Vorteilhafte Ausgestaltungen ergeben sich aus den Merkmalen der Unteransprüche.

Der Kern der Erfindung liegt im Wesentlichen darin, dass die Vorrichtung mit ihrem Gehäuse innerhalb eines speichenfreien Bereichs des Lenkrades untergebracht werden kann. Dadurch kann die Vorrichtung in beispielsweise in das von den Lenkradspeichen und dem oberen Drehkranz gebildete Volumen platziert werden.

Beim Halten des Lenkrads wird der Werker also nicht mehr vom überragenden Gehäuse gestört. Außerdem ist das Lenkrad frei beweglich, was die Vorrichtung anwendbar macht für dynamische Prüfstände und für das Fahren auf Prüfstrecken. Mit der Vorrichtung kann die subjektive Beurteilung des Werkers durch genaue Messungen bzw. auf diesen Messergebnissen basierende Berechnungen ersetzt werden.

Die Vorrichtung ist als Ergänzung zu bestehenden Mess- und

Automatisierungskomponenten, wie zum Beispiel einem Dynamikrollenprüfstand, einsetzbar. Die Vorrichtung weist eine spezielle Messtechnik auf, welche im Fahrzeug vor der Messfahrt adaptiert wird und die benötigten Messungen durchführt. Diese Vorrichtung kann als Steuergerät realisiert sein, d.h. die Messtechnik wird softwaretechnisch wie ein im Fahrzeug verbautes Steuergerät angesprochen. Dabei werden von Prüfmodulen gesendete Befehle zum Starten und Beenden von Messungen und zur Abfrage der Messergebnisse durch die in der Vorrichtung enthaltene Messtechnik ausgeführt.
Die Vorrichtung wird am Lenkrad vorzugsweise oberhalb des Airbags befestigt. Die Messungen können auch ohne Werkereingriff durchgeführt werden, so dass kein

Umgreifen notwendig ist, welche das Messergebnis negativ beeinflussen können. Das Gewicht der Vorrichtung ist vorzugsweise niedrig zu halten, damit eventuelle Vibrationen des Lenkrads nicht gedämpft werden und dadurch das Messergebnis verfälscht wird. Die Vorrichtung hat über die Klemmmittel eine stabile, feste Verbindung zum Lenkrad. Ein schneller Einbau und Ausbau wird dadurch unterstützt. Die Vorrichtung wird von vorne in den speichenfreien Bereich des Lenkrads eingesetzt.

Eine wesentliche Bedeutung kommt dabei der mechanischen Befestigung der Vorrichtung innerhalb des Lenkrades zu. Erfindungsgemäß sind die Klemmmittel dazu als in Linearlagern geführte Anschlagelemente ausgeführt.

Die Anschlagelemente werden durch mechanisch unabhängige, aber elektronisch gekoppelte Schrittmotoren gesteuert. Die Auslegung erfolgt so, dass beim Einsetzen aus der Grundposition heraus die Vorrichtung mit definierter Vorspannkraft in den speichenfreien Bereich verspannt wird.

Das Verklemmen wird erst dann ausgelöst, wenn zwei optische oder nach anderen Prinzipien arbeitende Abstandssensoren an der Oberkante der Vorrichtung eine korrekte Vorplatzierung durch den Werker signalisieren.

Das Verklemmen kann ab dann vollautomatisch erfolgen. Die Vorrichtung geht danach in einen selbsthemmenden und damit energiesparenden Zustand über.

Die Vorrichtung kann über eine Ladeeinrichtung, wie beispielsweise einen Li-lon-Akku, verfügen, der im Ruhezustand der Vorrichtung über eingebaute Ladekontakte und ein eingebautes Ladegerät in einer Halterung geladen werden kann.

Die eigentliche Winkelmessung erfolgt durch elektronische Neigungssensoren, wie beispielsweise einen Inklinometer.

Die Messung erfolgt vorzugsweise in einem bestimmten definierten Zeitfenster, wobei durch geeignete Online-Algorithmen die Aktionen des Fahrers, z.B. Lenkkorrekturen ermittelt und ausgeblendet werden.

Die Informationen an den Werker werden über ein vollgraphisches Display symbolisch, als Text und/oder als Grafik übermittelt. Alle Interaktionen erfolgen mit einem Multifunktionsbedienknopf, der eine Menü-Navigation ermöglicht und Benutzereingaben erlaubt.

Die Kommunikation mit dem Steuergerät des Prüfstandes kann auf verschiedenen Wegen erfolgen:
1. WLAN-Verbindung,
2. Radio-Funkmodul und/oder
3. Infrarotverbindung.

Über die Infrarotverbindung erfolgt eine räumliche Zuordnung zwischen der Vorrichtung und dem Prüfstand, beispielsweise ob die Vorrichtung in einem Linkslenker- oder in einem Rechtslenker-Fahrzeug untergebracht ist. Die Ergebnisse werden automatisch an das Steuergerät übermittelt. Die Bewertung und Archivierung der Ergebnisse erfolgt im Steuergerät.

Nach Abschluss der Messung geht die Vorrichtung automatisch in einen Energiespar-Zustand über. Dazu kann die räumliche Lage des Messsystems ausgewertet werden. Wird beispielsweise durch die Infrarotverbindung festgestellt, dass sich die Vorrichtung auf dem Beifahrersitz befindet, also nicht mehr innerhalb des speichenfreien Bereichs, geht die Vorrichtung in den Energiesparmodus über.

Das Gehäuse bzw. die Klemmmittel der Vorrichtung können gepolstert sein, damit eine Beschädigung des Lenkrads beim Einbau, bei der Entnahme und während der Messungen vermieden wird.

Das erfindungsgemäße Verfahren zur objektiven Ermittlung einer Geradeausfahrt eines Kraftfahrzeuges zeichnet sich dadurch aus, dass das Gehäuse innerhalb eines speichenfreien Bereichs des Lenkrades befestigt wird.

Hierzu können Anschlagelemente der Klemmvorrichtung aus dem Gehäuse aus- und einfahrbar beispielsweise in einem Linearlager geführt werden.

Die Anschlagelemente können durch mechanisch unabhängige, aber elektronisch gekoppelte Schrittmotoren vorzugsweise synchron gesteuert werden.

Für ein sicheres Verklemmen können die Anschlagelemente mit an ihrem freien Ende angeordneten Bolzen in korrespondierende Eckbereiche des speichenfreien Bereichs eingepasst werden.

Damit auch beim Fahren mit eingebauter Vorrichtung diese bei Lenkradbewegungen sicher in ihrer Position verbleibt, kann die Vorrichtung durch an den Bolzen angebrachte Halteflügel am Lenkrad abgestützt werden.

Sobald die Vorrichtung innerhalb des speichenfreien Bereichs von einem Werker vorplatziert wurde, kann die Verklemmung automatisch ausgelöst werden.

In einer besonders bevorzugten Ausgestaltungsform des Verfahrens kann das automatische Auslösen durch einen Infrarotabstandssensor gestartet werden, der reagiert, sobald der Lenkradkranz geschnitten wird.

Mit einem Ladegerät, das in dem Gehäuse untergebracht wird, kann die Vorrichtung aufgeladen werden.

Mit einem innerhalb im Gehäuse untergebrachten Inklinometer kann die Lage im Raum bestimmt werden.

Über ein in den Gehäusedeckel eingelassenes Display kann die Interaktion mit einer Bedienperson durchgeführt werden.

Die Vorrichtung kann über einen Infrarotsender mit einem Prüfstand kommunizieren.

Über die Infrarotverbindung kann mit dem Infrarotsender eine räumliche Zuordnung zwischen der Vorrichtung und dem Prüfstand ermittelt werden.

Weitere vorteilhafte Ausgestaltungen werden im Folgenden anhand der Zeichnung näher erläutert. Dabei zeigen:
- Fig. 1: eine Vorrichtung in ihrer Arbeitsstellung,

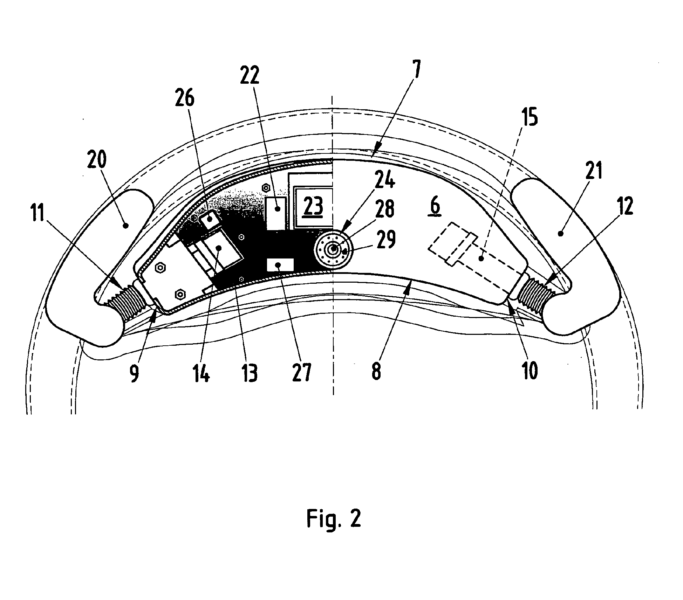

- Fig. 2: die Vorrichtung gemäß Fig. 1 in einer Ansicht ohne Gehäusedeckel sowie

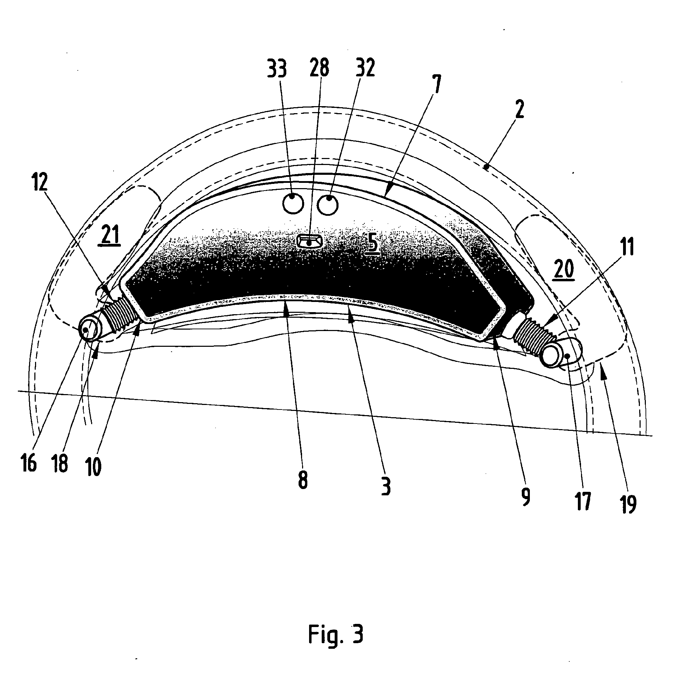

- Fig. 3: die Vorrichtung gemäß Fig. 1 in einer Ansicht von hinten.

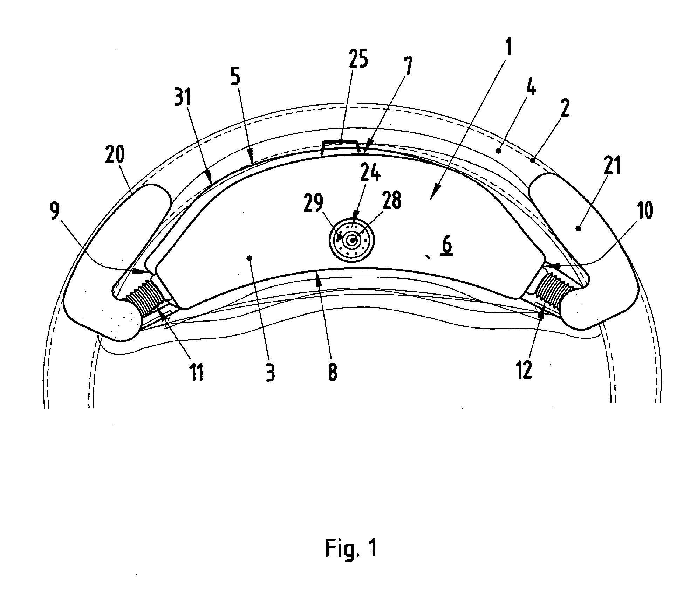

In Fig. 1 ist eine erfindungsgemäße Vorrichtung 1 zur objektiven Ermittlung einer Geradeausfahrt in ihrer Arbeitsstellung dargestellt. Arbeitsstellung bedeutet dabei, dass die Vorrichtung 1 mit einem Lenkrad 2 eines nicht näher dargestellten Kraftfahrzeuges derart verbunden ist, dass ein Mittel zur Erfassung der Lenkwinkelstellung, z.B. ein Inklinometer, exakt den aktuellen Lenkwinkel erfassen kann.

Die Vorrichtung 1 umfasst ein Gehäuse 3, das einen speichenfreien Bereich 4 des Lenkrades 2 nahezu ausfüllt. Der speichenfreie Bereich 4 befindet sich vorzugsweise oberhalb des Airbags. Bei der Festlegung der Abmaße des Gehäuses 3 ist darauf zu achten, dass die Vorrichtung 1 in eine möglichst große Anzahl von Lenkrädern einsetzbar ist.

Das Gehäuse 3 wird durch eine Rückwand 5, einen Gehäusedeckel 6 sowie zwei gewölbte Seitenwände 7 und 8 gebildet. Die beiden Seitenwände 7 und 8 sind durch jeweils eine rechte und eine linke Stirnwand 9 bzw. 10 miteinander verbunden. Das Gehäuse ist als verwindungssteifer Metallrahmen ausgebildet.

Jede der Stirnwand 9 bzw. 10 wird von einem Anschlagelement 11 bzw. 12 durchsetzt, die in Linearlagern geführt sind und zu einer Klemmvorrichtung 13 zugeordnet sind. Das Linearlager ist mit Drehmomentenübertragung ausgeführt, so dass keine Drehung um die Längsachse der Anschlagelemente 11 und 12 möglich ist.

Die Klemmvorrichtung 13 umfasst zwei elektromotorische Schrittmotoren 14 und 15, die jeweils in den Eckbereichen des Gehäuses 3 untergebracht sind und der wege- und kraftüberwacht eine Verstellung der Anschlagelemente 11 und 12 bewirkt. Damit können beim Verklemmen Schäden am Lenkrad vermieden werden. Jeder der Schrittmotoren 14 und 15 kann separat angesteuert werden. Allerdings werden die beiden Anschlagelemente 11 und 12 vorzugsweise synchron ausgefahren.

Die Anschlagelemente 11 und 12 weisen an ihrem freien Ende einen Bolzen 16 und 17 auf, der sich in Eckbereichen 18 und 19 des speichenfreien Bereichs 4 einpassen kann und der, um Beschädigungen am Lenkrad zu vermeiden, gepolstert sein kann. Auf dem Bolzen 16 und 17 sind Halteflügel 20 und 21 schwenkbar befestigt. In die Halteflügel 20, 21 sind Magnete eingearbeitet, die mit dem metallenen Lenkradkranz zusammenwirken, sodass die Vorrichtung 1 eine definierte Lage innerhalb des speichenfreien Bereichs 4 einnehmen kann. Außerdem sorgen die Halteflügel 20 und 21 dafür, dass beim Drehen des Lenkrads, beispielsweise beim Fahren auf einer Prüfstrecke, die Vorrichtung 1 sicher in ihrem speichenfreien Bereich 4 verbleibt.

Das Gehäuse 3 nimmt neben der Klemmvorrichtung 13 auch noch einen Inklinometer 22, ein Display 23 und eine Bedieneinrichtung 24 auf. Ferner ist ein Infrarotsender 25, eine Echtzeituhr 26 und ein akustischer Lautgeber 27 im Gehäuse untergebracht.

Die eigentliche Winkelmessung erfolgt durch elektronische Neigungssensoren, wie beispielsweise den Inklinometer 22. Der Inklinometer 22 kann als dreiachsiger Beschleunigungssensor ausgebildet sein, der die Lage im Raum ermittelt. Bei einem Abgleich mit einer vorher definierten Solllage kann durch den akustischen Lautgeber 27 eine Warnmeldung erzeugt werden.

Das Display 23 ist als Grafik-Display ausgebildet. Über das Display 23 ist eine Benutzerführung möglich. Fehlermeldungen und der Messdatenverlauf können angezeigt werden. Der Werker kann über das Display 23 Anweisungen erhalten.

Die Bedieneinrichtung 24 ist als Multifunktionsbedienknopf ausgeführt mit einem mittigen Druckknopf 28 und ein um diesen drehbares Rad 29. Zur besseren Nutzerführung können rundum das Rad 29 Leuchtdioden 30 angeordnet sein.

Der Infrarotsender 25 dient zur Kommunikation mit dem Prüfstand. Am Prüfstand ist ein korrespondierender Kommunikationspartner vorgesehen, der zur Erkennung der Position der Vorrichtung 1 im Fahrzeug, beispielsweise ob die Vorrichtung bei einem Linkslenkerfahrzeug oder einem Rechtslenkerfahrzeug angeordnet ist, geeignet ist. Über den Infrarotsender 25 werden zudem Messdaten, wie der erfasste Lenkwinkel oder die Echtzeit, ausgetauscht.

Die Echtzeituhr 26 dient dazu, einen korrekten Zeitbezug zwischen der Vorrichtung 1 und dem Prüfstand herzustellen. Durch diese Zeitsynchronisation kann die Nachvollziehbarkeit der Messkurve gewährleistet werden.

Der akustische Lautgeber 27 dient zur akustischen Ausgabe von Meldungen, beispielsweise Fehlermeldungen oder Warnmeldungen.

Ein an der Rückwand 8 der Vorrichtung 1 zusätzlich angebrachter Infrarotabstandssensor 28 dient zur Abstandsbestimmung der Vorrichtung zum Lenkrad, wobei eine automatische Adaption an die Lenkradfarbe vorgesehen ist. Sobald der Infrarotabstandssensor 28 den Lenkradkranz schneidet, dient dieses Signal als Start für das Ausfahren der Anschlagelemente 11 und 12.

Für einen unabhängigen Einsatz der Vorrichtung 1 ist ein Ladegerät 29 inklusive Akkus und Ladekontakte 32in der Vorrichtung 1 integriert.

Für die Vorrichtung 1 kann eine Halterung 31 vorgesehen sein, die in Fig. 1 zusätzlich abgebildet ist. Normalerweise ist die Halterung 31 an einer Wand befestigt, in die die Vorrichtung 1 in ihrer Nichtgebrauchsstellung abgelegt werden kann. Die Halterung 31 kann einen Ladeanschluss zum Laden des Ladegeräts 29 aufweisen. Damit werden die Akkus automatisch geladen, wenn sich die Vorrichtung 1 in ihrer Halterung befindet.

Denkbar ist, dass eine automatische Kalibrierung vorgesehen ist. D.h., die Vorrichtung 1 wird in der Halterung automatisch kalibriert, wenn die Anschlagelemente 11 und 12 voll ausgefahren sind. Die Halterung 31 kann die Vorrichtung 1 magnetisch halten. Es ist auch denkbar, dass die Vorrichtung 1 mittels Formschluss in der Halterung 31 gehalten wird.

Der Einsatz der Vorrichtung gestaltet sich wie folgt:

Bei Entnahme der Vorrichtung 1 aus der Halterung werden die Anschlagelemente 11 und 12 automatisch von ihrer voll ausgefahrenen Maximalposition in ihre Minimalposition eingefahren, da der Infrarotabstandssensor 28 die fehlende Halterung 31 registriert. Beim Einsetzen der Vorrichtung 1 in den speichenfreien Bereich 4 des Lenkrades registriert der Infrarotabstandssensor 28 den Lenkradkranz und startet das Ausfahren der Anschlagelemente 11 und 12 in Richtung der Eckbereiche des speichenfreien Bereichs 4. Die Halteflügel 20 und 21 begrenzen das Einsetzen der Vorrichtung 1 in Lenksäulenrichtung, so dass die Vorrichtung 1 eine definierte Lage innerhalb des speichenfreien Bereichs 4 einnimmt.

Durch die Kommunikation zwischen Prüfstand und Vorrichtung 1 über den Infrarotsender kann die Messung des Lenkwinkels gestartet werden, wenn das Fahrzeug eine vorher definierte Geschwindigkeit erreicht hat. Das Messkommando wird über den Kommunikationspartner des Prüfstandes an die Vorrichtung 1 gegeben. Gleichzeitig mit anderen Fahrzeugmessdaten wird dann über die Dauer der Messung auch der Lenkradwinkel erfasst. Da es in der Regel beim Anfahren zu Beginn und beim Abbremsen zu Ende der Messung zu Lenkradausschlägen durch den Fahrer kommen kann, ist ein Algorithmus vorgesehen, der diese unplausiblen Messdaten ausblenden kann. Diese sogenannten Korrekturverrisse können dann bei der Auswertung der Messergebnisse unberücksichtigt bleiben.

## Patentansprüche

1. Vorrichtung zur objektiven Ermittlung einer Geradeausfahrt eines Kraftfahrzeuges mit einem Gehäuse (3), einer Klemmvorrichtung (13) zum Verklemmen der Vorrichtung (1) mit dem Lenkrad (2), und mit einem Messmittel zur Erfassung der Lenkwinkelstellung, **dadurch gekennzeichnet, dass** ein Infrarotabstandssensor (28) vorhanden ist, dass das Gehäuse (3) innerhalb eines speichenfreien Bereichs (4) des Lenkrades (2) befestigbar ist und das Verklemmen, nach einer Vorplatzierung der Vorrichtung innerhalb des speichenfreien Bereichs (4), durch den Infrarotabstandssensor (28) automatisch auslösbar ist.

2. Vorrichtung nach Anspruch 1,
**dadurch gekennzeichnet,**
**dass** die Klemmvorrichtung (13) Anschlagelemente (11, 12) aufweist, die aus dem Gehäuse (3) aus- und einfahrbar geführt sind.

3. Vorrichtung nach Anspruch 2,
**dadurch gekennzeichnet,**
**dass** Anschlagelemente (11, 12) durch mechanisch unabhängige, elektronisch gekoppelte Schrittmotoren (14, 15) gesteuert sind.

4. Vorrichtung nach Anspruch 2 oder 3,
**dadurch gekennzeichnet,**
**dass** die Anschlagelemente (11, 12) an ihrem freien Ende jeweils einen Bolzen (16, 17) aufweisen.

5. Vorrichtung nach Anspruch 4,
**dadurch gekennzeichnet,**
**dass** an dem Bolzen (16, 17) ein Halteflügel (20, 21) zur Abstützung der Vorrichtung (1) am Lenkrad (2) vorgesehen ist.

6. Vorrichtung nach einem oder mehreren der vorgenannten Ansprüche,
**dadurch gekennzeichnet,**
**dass** ein Ladegerät (29) in dem Gehäuse (3) untergebracht ist, wobei an einer der Außenseiten des Gehäuses (3) Ladekontakte vorgesehen sind.

7. Vorrichtung nach einem oder mehreren der vorgenannten Ansprüche,
**dadurch gekennzeichnet,**
**dass** ein Inklinometer (22) innerhalb des Gehäuses angeordnet ist.

8. Vorrichtung nach einem oder mehreren der vorgenannten Ansprüche,
**dadurch gekennzeichnet,**
**dass** ein Display (23) in den Gehäusedeckel (6) eingelassen ist.

9. Vorrichtung nach einem oder mehreren der vorgenannten Ansprüche,
**dadurch gekennzeichnet,**
**dass** ein Infrarotsender (25) zur Kommunikation mit einem Prüfstand vorgesehen ist.

10. Vorrichtung nach Anspruch 9,
**dadurch gekennzeichnet,**
**dass** über die Infrarotverbindung mit dem Infrarotsender (25) eine räumliche Zuordnung zwischen der Vorrichtung (1) und dem Prüfstand erfolgt.

11. Vorrichtung nach einem oder mehreren der vorgenannten Ansprüche,
**dadurch gekennzeichnet,**
**dass** das Gehäuse (3), die Anschlagelemente (11, 12), die Bolzen (16, 17) und/oder die Halteflügel (20, 21) gepolstert sind.

12. Verfahren zur objektiven Ermittlung einer Geradeausfahrt eines Kraftfahrzeuges mit einer Vorrichtung (1) mit einem Gehäuse (3), einer Klemmvorrichtung (13) zum Verklemmen der Vorrichtung (1) mit einem Lenkrad (2), und mit einem Messmittel zur Erfassung der Lenkwinkelstellung,
**dadurch gekennzeichnet, dass** das Gehäuse (3) innerhalb eines speichenfreien Bereichs (4) des Lenkrades (2) befestigbar ist und das Verklemmen, nach einer Vorplatzierung der Vorrichtung innerhalb des speichenfreien Bereichs (4), durch einen Infrarotabstandssensor (28) automatisch ausgelöst wird.

13. Verfahren nach Anspruch 12,
**dadurch gekennzeichnet,**
**dass** Anschlagelemente (11, 12) der Klemmvorrichtung (13) aus dem Gehäuse (3) aus- und einfahrbar geführt werden.

14. Verfahren nach Anspruch 13,
**dadurch gekennzeichnet,**
**dass** die Anschlagelemente (11, 12) durch mechanisch unabhängige, aber elektronisch gekoppelte Schrittmotoren (14, 15) gesteuert werden.

15. Verfahren nach Anspruch 13 oder 14,
**dadurch gekennzeichnet,**
**dass** die Anschlagelemente (11, 12) mit an ihrem freien Ende angeordneten Bolzen (16, 17) in Eckbereiche des speichenfreien Bereichs (4) eingepasst werden.

16. Verfahren nach Anspruch 15,
**dadurch gekennzeichnet,**
**dass** die Vorrichtung (1) durch an dem Bolzen (16, 17) angebrachte Halteflügel (20, 21) am Lenkrad (2) abgestützt werden.

17. Verfahren nach Anspruch 16,
**dadurch gekennzeichnet,**
**dass** das automatische Auslösen durch einen Infrarotabstandssensor (28) gestartet wird.

18. Verfahren nach einem oder mehreren der vorgenannten Ansprüche,
**dadurch gekennzeichnet,**
**dass** mit einem Ladegerät (29), das in dem Gehäuse (3) untergebracht wird, die Vorrichtung (1) aufgeladen wird.

19. Verfahren nach einem oder mehreren der vorgenannten Ansprüche,
**dadurch gekennzeichnet,**
**dass** mit einem innerhalb im Gehäuse (3) untergebrachten Inklinometer (22) die Lage im Raum bestimmt wird.

20. Verfahren nach einem oder mehreren der vorgenannten Ansprüche,
**dadurch gekennzeichnet,**
**dass** über ein in den Gehäusedeckel (6) eingelassenes Display (23) die Interaktion mit einer Bedienperson durchgeführt wird.

21. Verfahren nach einem oder mehreren der vorgenannten Ansprüche,
**dadurch gekennzeichnet,**
**dass** die Vorrichtung (1) über einen Infrarotsender (25) mit einem Prüfstand kommuniziert.

22. Verfahren nach Anspruch 9,
**dadurch gekennzeichnet,**
**dass** über die Infrarotverbindung mit dem Infrarotsender (25) eine räumliche Zuordnung zwischen der Vorrichtung (1) und dem Prüfstand ermittelt wird.

## Claims

1. Device for objectively determining straight-ahead travel of a motor vehicle, having a housing (3), a clamping device (13) for clamping the device (1) to the steering wheel (2), and having a measuring means for detecting the steering angle position,
**characterized in that** an infrared distance sensor (28) is present, **in that** the housing (3) can be attached inside a spoke-free region (4) of the steering wheel (2), and the clamping can be triggered automatically by the infrared distance sensor (28) after pre-positioning of the device inside the spoke-free region (4).

2. Device according to Claim 1,
**characterized**
**in that** the clamping device (13) has stop elements (11, 12) which are guided in such a way that they can be extended from and retracted into the housing (3).

3. Device according to Claim 2,
**characterized**
**in that** stop elements (11, 12) are controlled by mechanically independent, electronically coupled stepping motors (14, 15).

4. Device according to Claim 2 or 3,
**characterized**
**in that** the stop elements (11, 12) have a bolt (16, 17) at each of their free ends.

5. Device according to Claim 4,
**characterized**
**in that** a securing wing (20, 21) for supporting the device (1) on the steering wheel (2) is provided on the bolt (16, 17).

6. Device according to one or more of the preceding claims,
**characterized**
**in that** a charging device (29) is accommodated in the housing (3), wherein charging contacts are provided on one of the outer sides of the housing (3).

7. Device according to one or more of the preceding claims,
**characterized**
**in that** an inclinometer (22) is arranged inside the housing.

8. Device according to one or more of the preceding claims,
**characterized**
**in that** a display (23) is let into the housing cover (6).

9. Device according to one or more of the preceding claims,
**characterized**
**in that** an infrared transmitter (25) is provided for communication with a test bench.

10. Device according to Claim 9,
**characterized**
**in that** a spatial assignment between the device (1) and the test bench is effected by means of the infrared link to the infrared transmitter (25).

11. Device according to one or more of the preceding claims,
**characterized**
**in that** the housing (3), the stop elements (11, 12), the bolts (16, 17) and/or the securing wings (20, 21) are upholstered.

12. Method for objectively determining straight-ahead travel of a motor vehicle, having a device (1) with a housing (3), a clamping device (13) for clamping the device (1) to a steering wheel (2) and having a measuring means for detecting the steering angle position,
**characterized in that** the housing (3) can be attached inside a spoke-free region (4) of the steering wheel (2), and the clamping is triggered automatically by an infrared distance sensor (28) after pre-positioning of the device inside the spoke-free region (4).

13. Method according to Claim 12,
**characterized**
**in that** stop elements (11, 12) of the clamping device (13) are guided in such a way that they can be extended from and retracted into the housing (3).

14. Method according to Claim 13,
**characterized**
**in that** the stop elements (11, 12) are controlled by mechanically independent but electronically coupled stepping motors (14, 15).

15. Method according to Claim 13 or 14,
**characterized**
**in that** the stop elements (11, 12) are fitted with a bolt (16, 17) arranged at each of their free ends in corner regions of the spoke-free region (4).

16. Method according to Claim 15,
**characterized**
**in that** the device (1) is supported on the steering wheel (2) by securing wings (20, 21) which are provided on the bolt (16, 17).

17. Method according to Claim 16,
**characterized**
**in that** the automatic triggering is started by an infrared distance sensor (28).

18. Method according to one or more of the preceding claims,
**characterized**
**in that** the device (1) is charged with a charging device (29) which is accommodated in the housing (3).

19. Method according to one or more of the preceding claims,
**characterized**
**in that** the position in space is determined with an inclinometer (22) which is accommodated inside the housing (3).

20. Method according to one or more of the preceding claims,
**characterized**
**in that** the interaction with an operator is carried out by a display (23) which is let into the housing cover (6).

21. Method according to one or more of the preceding claims,
**characterized**
**in that** the device (1) communicates with a test bench via an infrared transmitter (25).

22. Method according to Claim 9,
**characterized**
**in that** a spatial assignment between the device (1) and the test bench is determined by means of the infrared link to the infrared transmitter (25).

## Revendications

1. Dispositif pour déterminer de façon objective la marche en ligne droite d'un véhicule automobile avec un carter (3), un dispositif de coincement (13) servant à coincer le dispositif (1) avec le volant de direction (2) et un moyen de mesure servant à détecter la position de l'angle de braquage, **caractérisé en ce qu'**un capteur de mesure de distance à infrarouge (28) est présent, que le carter (3) peut être fixé à l'intérieur d'une zone sans rayon (4) du volant de direction (2) et que le coincement peut être automatiquement déclenché après un placement du dispositif à l'intérieur de la zone sans rayon (4) par le biais du capteur de mesure de distance à infrarouge (28).

2. Dispositif selon la revendication 1, **caractérisé en ce que** le dispositif de coincement (13) comporte des éléments de butée (11, 12) guidés de façon à pouvoir être entrés et sortis du carter (3).

3. Dispositif selon la revendication 2, **caractérisé en ce que** les éléments de butée (11, 12) sont commandés par des moteurs pas-à-pas (14, 15) couplés sur le plan électronique et indépendants sur le plan mécanique.

4. Dispositif selon la revendication 2 ou 3, **caractérisé en ce que** les éléments de butée (11, 12) comportent respectivement un boulon (16, 17) au niveau de leur extrémité libre.

5. Dispositif selon la revendication 4, **caractérisé en ce qu'**une aile de retenue (20, 21) est prévue au niveau du boulon (16, 17) pour maintenir le dispositif (1) au niveau du volant de direction (2).

6. Dispositif selon l'une quelconque des revendications précédentes ou plusieurs d'entre elles, **caractérisé en ce qu'**un appareil de charge (29) est placé dans le carter (3), des contacts de charge étant prévus au niveau d'un des côtés extérieurs du carter (3).

7. Dispositif selon l'une quelconque des revendications précédentes ou plusieurs d'entre elles, **caractérisé en ce qu'**un inclinomètre (22) est disposé à l'intérieur du carter.

8. Dispositif selon l'une quelconque des revendications précédentes ou plusieurs d'entre elles, **caractérisé en ce qu'**un écran (23) est encastré dans le cache de carter (6).

9. Dispositif selon l'une quelconque des revendications précédentes ou plusieurs d'entre elles, **caractérisé en ce qu'**un émetteur à infrarouge (25) est prévu pour communiquer avec un banc d'essai.

10. Dispositif selon la revendication 9, **caractérisé en ce qu'**un appariement spatial entre le dispositif (1) et le banc d'essai se produit se produit avec l'émetteur à infrarouge (25) via la liaison à infrarouge.

11. Dispositif selon l'une quelconque des revendications précédentes ou plusieurs d'entre elles, **caractérisé en ce que** le carter (3), les éléments de butée (11, 12), les boulons (16, 17) et/ou les ailes de retenue (20, 21) sont rembourrés.

12. Procédé pour déterminer de façon objective la marche en ligne droite d'un véhicule automobile avec un dispositif (1) doté d'un carter (3), d'un dispositif de coincement (13) servant à coincer le dispositif (1) avec le volant de direction (2) et d'un moyen de mesure servant à détecter la position de l'angle de braquage, **caractérisé en ce que** le carter (3) peut être fixé à l'intérieur d'une zone sans rayon (4) du volant de direction (2) et que le coincement est automatiquement déclenché par un capteur de mesure de distance à infrarouge (28) après un placement du dispositif à l'intérieur de la zone sans rayon (4).

13. Procédé selon la revendication 12, **caractérisé en ce que** les éléments de butée (11, 12) du dispositif de coincement (13) sont guidés de façon à pouvoir être entrés et sortis du carter (3).

14. Procédé selon la revendication 13, **caractérisé en ce que** les éléments de butée (11, 12) sont commandés par des moteurs pas-à-pas (14, 15) indépendants sur le plan mécanique mais couplés sur le plan électronique.

15. Procédé selon la revendication 13 ou 14, **caractérisé en ce que** les éléments de butée (11, 12) sont emboîtés, avec les boulons (16, 17) disposés au niveau de leur extrémité libre, dans les zones de coin de la zone sans rayon (4).

16. Procédé selon la revendication 15, **caractérisé en ce que** le dispositif (1) est soutenu au niveau du volant de direction (2) par les ailes de retenue (20, 21) placées au niveau du boulon (16, 17).

17. Procédé selon la revendication 16, **caractérisé en ce que** le déclenchement automatique est démarré par un capteur de mesure de distance à infrarouge (28).

18. Procédé selon l'une quelconque des revendications précédentes ou plusieurs d'entre elles, **caractérisé en ce que** le dispositif (1) est chargé avec un appareil de charge (29) placé dans le carter (3).

19. Procédé selon l'une quelconque des revendications précédentes ou plusieurs d'entre elles, **caractérisé en ce que** la position dans l'espace est déterminée au moyen d'un inclinomètre (22) placé à l'intérieur du carter (3).

20. Procédé selon l'une quelconque des revendications précédentes ou plusieurs d'entre elles, **caractérisé en ce que** l'interaction avec un utilisateur est réalisée par le biais d'un écran (23) encastré dans le cache de carter (6).

21. Procédé selon l'une quelconque des revendications précédentes ou plusieurs d'entre elles, **caractérisé en ce que** le dispositif (1) communique avec un banc d'essai via un émetteur à infrarouge (25).

22. Procédé selon la revendication 9, **caractérisé en ce qu'**un appariement spatial entre le dispositif (1) et le banc d'essai est calculé avec l'émetteur à infrarouge (25) via la liaison à infrarouge.
